Europäisches Patentamt

European Patent Office

Office européen des brevets

(19)

(11) Veröffentlichungsnummer: **0 288 569**
**A1**

(12) # EUROPÄISCHE PATENTANMELDUNG

Veröffentlicht nach Art. 158 Abs. 3 EPÜ

(21) Anmeldenummer: 87905561.4

(22) Anmeldetag: 21.05.87

Daten der zugrundeliegenden internationalen Anmeldung:

(86) Internationale Anmeldenummer:
PCT/SU87/00059

(87) Internationale Veröffentlichungsnummer:
WO88/03407 (19.05.88 88/11)

(51) Int. Cl.³: **A 61 K 35/78**

(30) Priorität: 12.11.86 SU 4142793

(43) Veröffentlichungstag der Anmeldung:
02.11.88 Patentblatt 88/44

(84) Benannte Vertragsstaaten:
AT BE CH DE FR GB IT LI NL SE

(71) Anmelder: INSTITUT MOLEKULYARNOI BIOLOGII I
BIOKHIMII AKADEMII NAUK KAZAKHSKOI SSR
ul. Michurina, 80
Alma-Ata, 480012(SU)

(72) Erfinder: GILMANOV, Murat Kurmashevich
mikroraion "Koktem-3", 13-62
Alma-Ata, 480070(SU)

(72) Erfinder: DILBARKANOVA, Rsai
ul. Satpaeva, 93-27
Alma-Ata, 480046(SU)

(72) Erfinder: SULTANBAEV, Beibyt Erkenovich
ul. Krasina, 107-92
Alma-Ata, 480100(SU)

(74) Vertreter: von Füner, Alexander, Dr. et al,
Patentanwälte v. Füner, Ebbinghaus, Finck Mariahilfplatz
2 & 3
D-8000 München 90(DE)

(54) VERFAHREN ZUR HERSTELLUNG VON PHOSPHATIDILINOSIT AUS EINEM BIOLOGISCHEN OBJEKT.

(57) Verfahren zur Herstellung von Phosphatidilinosit aus einem biologischen Objekt sieht seine Homogenisierung in einer wässrigen Salzlösung mit einer molaren Konzentration von 0,005 bis 1 Mol bei einem pH-Wert von 5,0 bis 11,0 vor. Das Homogenat zentrifugiert man bei einer Schwerebeschleunigung von 3000 bis 30000 g oder filtert man auf einem Filter mit Porenabmessungen von 3 bis 50 μm zwecks Trennung der zellfreien wässrigen Salz-Phase, die die Teilchen des Protein-Phosphatidilinosit-Komplexes aufweist, die man mit Hilfe von alkalischen oder neutralen Proteasen oder der Gelchromatografie, oder Ultrafiltration abscheidet. Aus den abgeschiedenen Teilchen des Protein-Phosphatidilinosit-Komplexes wird das Produkt mit Methanol oder destilliertem Wasser extrahiert.

EP 0 288 569 A1

VERFAHREN ZUR HERSTELLUNG VON PHOSPHATIDILINOSIT
AUS EINEM BIOLOGISCHEN OBJEKT

Gebiet der Technik

Die vorliegende Erfindung bezieht sich auf das Gebiet der Herstellung von Lipiden und betrifft insbesondere ein Verfahren zur Herstellung von Phosphatidilinosit aus einem biologischen Objekt.

Phosphatidilinosit gehört zur Klasse der Phospholipide und wird als biochemisches Reagens für die Herstellung von Membranensystemen, die die Prozesse der lebenden Organismen modellieren, für die Bildung von Liposomen, die für die Übertragung artfremder genetischer Information in die Zellen der lebenden Organismen dienen, für die Übertragung artfremder Proteine, Vakzinen und Fermente durch die Membranenbarrieren des Organismus, für den Transport von Arzneimittel und anderen Agenzien zu den Zielgeweben verwendet.

Vorhergehender Stand der Technik

Bekannt ist eine Reihe von Verfahren zur Herstellung von Phosphatidilinosit aus verschiedenen biologischen Objekten, beispielsweise, aus Gehirn und Herz von Tieren, aus Bakterien und Samen. Bekannt ist ebenfalls ein Verfahren zur Herstellung von Phosphatidilinosit aus Hefe ("Preparativnaya khimiya lipidov pod redaktsiei Bergelsona L.D. i Dyatlovitskoi E.V., 1981, Nauka (Moskva), S.178"; deutsch- Präparative Chemie von Lipiden unter Redaktion von L.D.Bergelson und E.W.Dyatlovitskaya, 1981, Nauka (Moskau), S.178).

Verfahren zur Herstellung von Phosphatidilinosit aus Hefe sieht die Hefeautolyse mit Hilfe von Toluol innerhalb von 5 Stunden, die Extraktion von Phospholipiden mit einem Gemisch aus Chloroform-Methanol (1:1) innerhalb von 7 Stunden, die Filtration des Extraktes mittels Waschung des Niederschlags mit dem genannten Gemisch aus organischen Lösungsmittel an einem Filter, die Vermischung des Filtrats mit destilliertem Wasser innerhalb von 20 Stunden, die Trennung des Filtrats in wässrige Phase und in Chloroform-Phase, das Eindampfen der Chloroform-Phase, die Bearbeitung der eingedampften Chloroform-Phase mit Isopropylalkohol und ihre anschliessende Filtration durch ein Glasfilter vor. Im weiteren werden die Phospholipide aus dem angefallenen Filtrat auf einer Säule mit Silikagel durch aufeinanderfolgende Abspülung derselben zunächst mit 5 bis 7 Litern eines Gemisches aus Chloroform : Methanol : Ammoniak (80 : 20 : 2) und dann mit 1 bis 2 Litern des Äthylalkohols getrennt und hierdurch wird das Ammoniumsalz des Phosphatidilinosits ausgeschieden, das dann ins Natriumsalz überführt wird.

Das genannte Verfahren verlangt einen grossen Verbrauch an kostspieligen organischen Lösungsmitteln. So sind es für die Herstellung von 1 g Phosphatidilinosit über 5 Liter Chloroform, über 3 Liter Methanol, etwa 1 Liter Äthylalkohol und andere Lösungsmittel erforderlich. Das Verfahren sieht mehrere arbeitsaufwendige Operationen vor, die einen grossen Zeitaufwand verlangen. All das verteuert bedeutend die Kosten des Endproduktes (1 g Phosphatidilinosit kostet nach dem Katalog Calbiochem 1986 - 6950 Dollar). Die Arbeit mit grossen Mengen von Lösungsmitteln verursacht schädliche Arbeitsbedingungen, was die Schaffung normaler Bedingungen für das Bedienungspersonal erschwert.

Offenbarung der Erfindung

Die Aufgabe der vorliegenden Erfindung bestand in der Entwicklung eines solchen Verfahrens zur Herstellung von Phosphatidilinosit, das es ermöglicht, den Verbrauch an organischen Lösungsmitteln wesentlich zu vermindern, den Arbeits- und Zeitaufwand zu verringern, die Arbeitsbedingungen zu verbessern und die Kosten des Produktes bedeutend zu senken.

Die gestellte Aufgabe wurde durch ein Verfahren zur Hetstellung von Phosphatidilinosit aus einem biologischen Objekt durch seine Homogenisierung und die Extraktion des Produktes gelöst, welches erfindungsgemäss, dadurch gekennzeichnet,wird, dass es vorsieht:

- Homogenisierung des biologischen Objektes in einer wässrigen Salzlösung mit einer molaren Konzentration von 0,005 bis 1 Mol bei einem pH-Wert von 5,0 bis 11,0;

- Trennung des angefallenen Homogenats in zellfreie wässrige Salz-Phase, die Teilchen des Protein-Phosphatidilinosit-Komplexes aufweist, und in Niederschlag, der nichtzerstörte Zellen und Teilchen anderer Phospholipide enthält, durch Zentrifugierung bei einer Schwerebeschleunigung in einem Bereich von 3000 bis 30000 g beziehungsweise durch Filtration auf einem Filter mit Porenabmessungen von 3 bis 50 $\mu$m;

- Ausscheidung aus der zellfreien wässrigen Salz-Phase von Teilchen des Protein-Phosphatidilinosit-Komplexes;

- Extraktion des Phosphatidilinosits aus den ausgeschiedenen Teilchen des Protein-Phosphatidilinosit-Komplexes.

Die Ausscheidung der Teilchen des Protein-Phosphatidilinosit-Komplexes aus der zellfreien wässrigen Salz-Phase kann mittels Gelchromatografie mit einem Sorptionsmittel, das fähig ist, Stoffe mit einer Molekularmasse über 1 Million Dalton zu trennen, oder mittels Ultrafiltration auf einem Filter mit den Porenabmessungen nicht unter 0,2 $\mu$m durchgeführt werden. Die Ausscheidung der Teilchen des Protein-Phosphatidilinosit-Komplexes aus der genannten wässrigen Salz-Phase kann ausserdem durch ihre Behandlung mit alkalischen oder neutralen Proteasen erfolgen, dabei kleben die genannten Teilchen zusammen und lassen sich leicht trennen. Diese Variante der Ausscheidung der Teilchen des Protein-Phosphatidilinosit-Komplexes ist vorzuziehen, weil sie einfach in der Realisierung ist, und weil die genannten Reagenzien - Proteasen- zugänglich und relativ billig sind.

- 4 -

Aus den ausgeschiedenen Teilchen des Protein-Phosphatidilinosit-Komplexes wird das Endprodukt durch Extradtion mit Methanol beziehungsweise mit seinem Gemisch mit Chloroform oder mit destilliertem Wasser isoliert. Als biologisches Objekt wird es empfohlen, Verarbeitungsprodukte von Samen der Graspflanzen zu verwenden, weil dieser Rohstoff besonders zugänglich und billig ist und bringt eine hohe Ausbeute an Endprodukt.

Das erfindungsgemässe Verfahren erlaubt es im Vergleich zum bekannten Verfahren, um einige Hundertfache den Verbrauch an organischen Lösungsmitteln zu verringern, um das 2 bis 4fache die Prozessdauer zu verkürzen, die Kosten für das Produkt bedeutend zu vermindern und die Arbeitsbedingungen zu verbessern.

Das Verfahren lässt sich leicht unter den grosstechnischen Bedingungen realisieren.

Die genannten Vorteile der Erfindung werden aus der nachstehenden ausführlichen Beschreibung des Verfahrens zur Herstellung von Phosphatidilinosit ersichtlich.

Als biologisches Objekt kann man Pflanzensamen, Produkte ihrer Verarbeitung, Wurzel, Blätter und Stengel sowie tierische Gewebe und Mikroorganismen verwenden, vorzugsweise sollen aber Samen der Gräserkulturen und Produkte ihrer Verarbeitung, beispielsweise, Kleie verwendet werden. Dieser Vorzug ist darauf zurückzuführen, dass der genannte Rohstoff zugänglich und billig ist sowie er ermöglicht, eine hohe Ausbeute an Phosphatidilinosit zu erzielen.

Biologisches Objekt wird mittels seiner Zerreibung in einem Mörser oder in einem Masserhomogenisator oder in einer anderen passenden Einrichtung der Homogenisierung ausgesetzt.

Erfindungsgemäss, erfolgt die Homogenisierung des biologischen Objektes in einer wässrigen Salzlösung mit einer molaren Konzentration von 0,005 bis 1 Mol. Dieser Grenzwert der Salzkonzentration wird dadurch bestimmt, dass eine Konzentration von Salz in Wasser unter 0,005 Mol nicht wünschenswert ist, weil das zur Auflösung des Protein-Phosphatidilinosit-Komplexes führt, wodurch die Herstellung des Produktes erschwert wird. Der obere Grenzwert der molaren Salzkonzentration kann über 1 Mol liegen bis zum Grenzwert der Löslichkeit des genommenen Salzes bei Raumtemperatur. Es ist jedoch zweckmässig, den oberen Grenzwert der Salzkonzentration auf 1 Mol zu beschränken. Die Vergrösserung der molaren Salzkonzentration über 1 Mol vergrössert nicht die Ausbeute an Produkt , erschwert seine Herstellung und führt zu einem unvertretbaren Verbrauch an Reagens. Als eine optimale molare Salzkonzentration gilt ein Wert von 0,05 bis 0,1 Mol.

Für die Zubereitung einer wässrigen Salzlösung kann man beliebige organische oder anorganische Salze ausser den Salzen verwenden, die chaotrope Eigenschaften aufweisen, und die fähig sind, den Protein-Phosphatidilinosit-Komplex zu zerstören. Besonders vorzuziehen ist die Verwendung eines Salzes mit neutralen beziehungsweise schwachalkalischen Eigenschaften, beispielsweise, Natriumchlorid, Natrium- bzw. Kaliumsalze der Phosphorsäure sowie Chlorid-, Phosphat- oder Saufatsalze des Trihydroxyaminomethans.

Erfindungsgemäss, erfolgt die Homogenisierung des biologischen Objektes in einer wässrigen Salzlösung, die einen pH-Wert gleich 5 bis 11 aufweist. Dieser pH-Grenzwert der wässrigen Salzlösung wird dadurch bestimmt, dass bei einem pH-Wert unter 5 und einem pH-Wert über 11 die Zerstörung der Teilchen des Protein-Phosphatidilinosit-Komplexes erfolgt, was unzulässig ist.

Bei der Homogenisierung des genannten Objektes in der genannten wässrigen Salzlösung erfolgt die Zerstörung des biologischen Objektes unter Ausscheidung von Teilchen des Protein-Phosphatidilinosit-Komplexes in die wässrige Salz-Phase. Für die Abscheidung der Teilchen des Protein-Phosphatidilinosit-Komplexes von den nichtzerstörten Zellen und Teilche, die andere Phospholipide aufweisen, wird das Homogenat, erfindungsgemäss, der Zentrifugierung oder der Filtration ausgesetzt. Die Zentrifugierung des Homogenats erfolgt bei einer Schwerebeschleunigung von 3000 bis 30000 g. Der genannte Grenzwert wird dadurch bestimmt, dass bei der Zentrifugierung unter 3000 g die Teilchen, die andere Phospholipide aufweisen, sich nicht absetzen und in der wässrigen Salz-Phase bleiben werden, was zur Verunreinigung des Phosphatidilinosits mit anderen Phospholipiden führen wird.

Bei der Zentrifugierung über 30000 g kommt es zum Ausfällen der Teilchen des Protein-Phosphatidilinosit-Komplexes, was die Ausbeute an Produkt wesentlich herabsetzt. Als optimaler Grenzwert der Schwerebeschleunigung bei der Zentrifugierung gilt ein Wert von 8000 bis 10000 g.

Die Trennung des Homogenats kann durch Filtration auf einem Filter mit den Porenabmessungen von 3 bis 5 $\mu$m erfolgen. Das Filtern des Homogenats auf einem Filter mit den Porenabmessungen unter 3 $\mu$m ist nicht wünschenswert, weil das zum Verbleib von Teilchen des Protein-Phosphatidilinosit-Komplexes am Filter führt, wodurch die Ausbeute an Endprodukt verringert wird. Das Filtern des Homogenats auf einem Filter mit Porenabmessungen über 50 $\mu$m ist ebenfalls nicht wünschenswert, weil in die wässrige Salz-Phase Teilchen eindringen werden, die andere Phospholipide aufweisen, was die Qualität des Endproduktes beträchtlich verschlechtert.

Infolge der Trennung des Homogenats unter Zuhilfenahme der genannten Arbeitsgänge erhält man eine zellfreie wässrige Salz-Phase, die Teilchen des Protein-Phosphatidilinosit-Komplexes aufweist, und einen Niederschlag, der andere Phospholipide aufweist, die entfernt werden.

Aus der zellfreien wässrigen Salz-Phase können die Teilchen des Protein-Phosphatidilinosit-Komplexes durch Gelchromatografie an Sorptionsmitteln ausgeschieden werden, die es ermöglichen, Stoffe mit einer molekularen Masse über 1 Mio Dalton zu trennen. Die Sorptionsmittel,

- 7 -

die die Stoffe mit einer molekularen Masse unter 1 Mio Dalton trennen, sind ungeeignet, weil sie es nicht erlauben, Teilchen des Protein-Phosphatidilinosit-Komplexes abzuscheiden. Als beste Sorptionsmittel gelten Gels vom Typ "Sefarose", "Sefakryl" der Firme "Pharmacia" (Schweden), "Ultragel" der Firma "LKB" (Schweden), "Biogel A" der Firma Biorad (USA), Toyapearl der Firma "Toya-soda" (Japan).

Die Ausscheidung der Teilchen des Protein-Phosphatidilinosit-Komplexes aus der zellfreien wässrigen Salz-Phase kann durch Ultrafiltration auf einem Filter mit den Potenabmessungen von höchstens 0,2 $\mu$m erfolgen. Filter mit Porenabmessungen über 0,2 $\mu$m ist es nicht wünschenswert zu verwenden, weil die Teilchen des Protein-Phosphatidilinosit-Komplexes in das Filtrat übergehen (eindrigen) werden, was die Ausbeute an Endprodukt vermindert.

Die Ausscheidung der Teilchen des Protein-Phosphatidilinosit-Komplexes aus der zellfreien wässrigen Salz-Phase kann auch durch Absetzen derselben in einer Ultrazentrifuge bei einer Schwerebeschleunigung von 30000 bis 100000 g erfolgen. Dieser Grenzwert wird dadurch bestimmt, dass es bei den Werten unter 30000 g zu einem unvollständigen Absetzen der erwähnten Teilchen kommt, und bei den Werten über 100000 g ist die Ultrafiltration nicht zweckmässig, weil dadurch die Ausbeute an Produkt nicht vergrössert wird und weil das zu einem unvertretbaren Verbrauch an Elektroenergie führt.

Ausser den genannten Varianten zur Ausscheidung der Teilchen des Protein-Phosphatidilinosit-Komplexes wird noch eine Variante für ihre Ausscheidung durch Bearbeitung der zellfreien wässrigen Salz-Phase mit alkalischen oder neutralen Proteasen vorgeschlagen. In Gegenwart der genannten Proteasen wird der grösste Teil des Proteins von den genannten Teilchen entfernt, weshalb die Teilchen zusammenkleben und lassen sich durch einfaches Filtern an einem Papier- oder Glasfilter leicht trennen oder

- 8 -

durch Zentrifugieren bei niedrigen Werten der Schwerebeschleunigung von 500 bis 10000 g absetzen. Für diese Variante verwendet man Proteasen in einer Menge von 5 bis 100 $\mu$g je 1 ml der wässrigen Salz-Phase. Der genannte Grenzwert wird dadurch bestimmt, dass die Proteasemenge unter 5 $\mu$g/ml für die vollständige Ausscheidung der Teilchen des Protein-Phosphatidilinosit-Komplexes unzureichend sein wird, und ihre Menge über 100 $\mu$g/ml unzweckmässig ist, weil das keinen zusätzlichen Nutzeffekt bringt, sondern zum unvertretbaren Verbrauch an Reagens führt.

Die Ausscheidung der Teilchen des Protein-Phosphatidilinosit-Komplexes mit den genannten Proteasen ist im Vergleich zu den anderen Varianten ihrer Abscheidung vorzuziehen. Das ist darauf zurückzuführen, dass in Gegenwart von alkalischen beziehungsweise neutralen Proteasen das Zusammenkleben der Teilchen des Protein-Phosphatidilinosit-Komplexes erfolgt, die sich auf einem Papieroder Glasfilter leicht und einfach trennen lassen. Die Proteasen sind relativ billig und zugänglich.

Dann werden die abgeschiedenen Teilchen des Protein-Phosphatidilinosit-Komplexes mit Diäthyläther oder Azeton oder mit anderen ähnlichen organischen Lösungsmittel behandelt, um Lipidbeimengungen daraus zu entfernen. Danach wird das Produkt mit Methanol oder seinem Gemisch mit Chloroform oder mit destilliertem Wasser extrahiert. Die Ausbeute an Phosphatidilinosit erreicht 90%, bezogen auf seinen Gehalt im biologischen Ausgangsobjekt.

Wie aus der ausführlichen Beschreibung der Erfindung hervorgeht, ist das erfindungsgemässe Verfahren in technologischer Ausführung einfach, verlangt keinen grossen Verbrauch an organischen Lösungsmitteln, verbessert die Arbeitsbedingungen, reduziert die Dauer der Prozessführung ungefähr auf das 2 bis 4fache und verbilligt wesentlich die Kosten des Produktes.

- 9 -

## Beste Ausführungsvariante der Erfindung

Als biologisches Objekt verwendet man Getreidekleie, beispielsweise, Weizenkleie. Die Homogenisierung der Kleie erfolgt mittels ihrer Zerreibung in einem wässrigen von 0,05 bis 0,1 molarer Lösung des Trishydroxyaminomethanchlorids bei einem pH-Wert von 8,3 bis 8,5 bis zum Anfallen eines Homogenats. Dabei kommt es zur Zerstörung der Kleiezellen und zur Abscheidung der Teilchen des Protein-Phosphatidilinosit-Komplexes in die wässrige Salz-Phase. Das hergestellte Homogenat setzt man der Zetrifugierung bei einer Schwerebeschleunigung von 10000 g während 10 Minuten aus. Dabei erfolgt die Abscheidung der zellfreien wässrigen Salz-Phase, die Teilchen des Protein-Phosphatidilinosit-Komplexes aufweist, von den nicht zerstörten Zellen und Teilchen, die andere Phospholipide aufweisen. Aus der hergestellten zellfreien wässrigen Salz-Phase werden die Teilchen des Protein-Phosphatidilinosit-Komplexes durch Behandlung dieser Phase mit alkalischen oder neutralen Proteasen in einer Menge von 0,05 mg (oder 50 $\mu$g) je 1 ml der genannten Phase abgeschieden. Bei dieser Behandlung kleben die Teilchen des Protein-Phosphatidilinosit-Komplexes zusammen und lassen sich durch Zentrifugieren bei einer Schwerebeschleunigung von 10000 g aus der genannten Phase abscheiden. Der angefallene Niederschlag der Teilchen des Protein-Phosphatidilinosit-Komplexes wird mit Diäthyläther zur Entfernung der das Produkt verunreinigenden Lipidbeimengungen ausgespült. Aus dem gereinigten Niederschlag der Teilchen von Protein-Phosphatidilinosit-Komplex wird das Produkt mit Methanol extrahiert. Die Produktausbeute beträgt etwa 93%, bezogen auf seinen Ausgangs-gehalt in der Weizenkleie.

Zur besseren Erläuterung der vorliegenden Erfindung werden Beispiele für konkrete Ausführung des Verfahrens zur Herstellung von Phosphatidilinosit angeführt.

Beispiel 1

10 g Maismehl zerreibt man in 0,05 molarer wässrigen Lösung von Dinatriumsalz der Phosphorsäure mit einem pH-Wert von 9,0 in einem Porzellanmörser bis zum Erzielen eines homogenen Zustands. Zur Abscheidung der zellenfreien wässrigen Salz-Phase wird das Homogenat auf einem Filter mit Porenabmessungen von 5 μm gefiltert. Die zellfreie wässrige Salz-Phase setzt man der Gelchromatografie an einer Säule mit "Sefarose 4B" zwecks Abscheidung der Fraktion aus, die Teilchen des Protein-Phosphatidilinosit-Komplexes aufweist. Diese Fraktion wird in einem Vakuumverdampfer bis zur Trockne konzentriert. Man behandelt den trockenen Rückstand mit 50 ml Azeton zwecks Beseitigung von Lipidbeimengungen. Das Endprodukt extrahiert man mit bidestilliertem Wasser. Die Ausbeute an Produkt beträgt 0,09 g (8,9%).

Beispiel 2

10 g Erbsensamen werden in einer Mühle gemahlen, dann wird die gemahlene Masse in einem Messerhomogenisator in 0,1 molarer $Na_2CO_3$-Lösung bei einem pH-Wert von 11,0 homogenisiert. Das Homogenat zentrifugiert man bei einer Schwerebeschleunigung von 10000 g während 10 Minuten. Die hergestellte zellfreie wässrige Salz-Phase setzt man der Ultrazentrifugierung bei Schwerebeschleunigung von 30000 g aus. Man spült den Niederschlag mit 50 ml Diäthyläther aus. Das Produkt extrahiert man mit 5 ml Methanol. Die Ausbeute an Produkt beträgt 0,02 g (65%).

Beispiel 3

10 g Eicheln zermahlt man in einer Mühle. Das angefallene Mehl zerreibt man in einer wässrigen Lösung des Natriumazetats mit einer Konzentration von 0,1 Mol bei einem pH-Wert von 5. Das hergestellte Homogenat zentrifugiert man bei einer Schwerebeschleunigung von 10000 g während 10 Minuten. Die zellfreie wässrige Salz-Phase setzt man der Gelchromatografie an einem Sorptionsmittel, Toyapearl H W 65 aus. Fraktionen, die Teilchen
des Protein-Phosphatidilinosit-Komplexes aufweisen, werden in einem Vakuumverdampfer eingedampft und mit 50 ml
Diäthyläther zwecks Beseitigung von Lipidbeimengungen
behandelt. Das Produkt extrahiert man mit 5 ml Methanol.
Die Ausbeute an Produkt beträgt 0,01 g (20%).

Beispiel 4

10 g Gerstenkleie zerreibt man in einer 0,005 molaren wässrigen Lösung des Kaliumchlorids mit einem
pH-Wert von 7. Das hergestellte Homogenat zentrifugiert
man bei einer Schwerebeschleunigung von 10000 g während
10 Minuten. Die zellfreie wässrige Salz-Phase, die Teilchen des Protein-Phosphatidilinosit-Komplexes aufweist,
behandelt man mit Papain in einer Menge von 50 µg je
1 ml der genannten Phase während 4 Stunden. Die zusammengeklebten Teilchen des Protein-Phosphatidilinosit-Komplexes lässt man mittels Zentrifugierens bei einer
Schwerebeschleunigung von 10000 g während 10 Minuten
absetzen. Man spült den Niederschlag mit 50 ml Diäthyläther zwecks Beseitigung von Lipidbeimengungen aus und
das Produkt extrahiert man mit 5 ml Methanol : Chloroform-Gemisch (2 : 1). Die Ausbeute an Produkt beträgt
0,05 g (50%).

Beispiel 5

10 g Meiskörner zermahlt man und homogenisiert in
einer 0,05 molaren wässrigen Natriumchloridlösung bei
einem pH-Wert von 7. Das hergestellte Homogenat zentrifugiert man bei einer Schwerebeschleunigung von 3000 g
während 10 Minuten. Die zellfreie wässrige Salz-Phase
scheidet man ab und behandelt mit Trypsin in einer Menge
von 50 µg je 1 ml der genannten Phase. Die zusammengeklebten Teilchen des Protein-Phosphatidilinosit-Komplexes
lässt man mittels Filtrierung auf einem Papierfilter absetzen. Man spült den Niederschlag am Filter mit 50 ml

- 12 -

Petroläther zwecks Beseitigung von Lipidbeimengungen aus. Das Produkt extrahiert man mit 5 ml Methanol. Die Ausbeute an Produkt beträgt 0,7 g (90%).

Beispiel 6

10 g Meiskörnerleie homogenisiert man in einer wässrigen Lösung des Trishydroxyaminomethanphosphats mit einer Konzentration von 0,05 Mol in einem Porzellanmörser. Das hergestellte Homogenat zentrifugiert man bei einer Schwerebeschleunigung von 30000 g während 10 Minuten. Die zellfreie wässrige Salz-Phase behandelt man mit Chymotrypsin in einer Menge von 50 $\mu$g/ml während 8 Stunden. Die zusammengeklebten Teilchen des Protein-Phosphatidilinosit-Komplexes lässt man mittels Zentrifugierung bei einer Schwerebeschleunigung von 10000 g während 10 Minuten absetzen. Der Niederschlag behandelt man mit 50 ml Diäthyläther zwecks Beseitigung von Lipidbeimengungen. Das Produkt extrahiert man mit 5 ml Methanol. Die Ausbeute an Produkt beträgt 0,02 g (18%).

Beispiel 7

10 g Weizenkleie homogenisiert man in einer wässrigen Lösung des Trishydroxyaminomethansulfats mit einer Konzentration von 0,1 Mol bei einem pH-Wert von 8,5 während 10 Minuten. Das hergestellte Homogenat filtert man auf einem Filter mit Porenabmessungen von 50 $\mu$m. Die abgeschiedene zellfreie wässrige Salz-Phase behandelt man mit Papain in einer Menge von 50 $\mu$g je 1 ml der genannten Phase während 4 Stunden. Die zusammengeklebten Teilchen des Protein-Phosphatidilinosit-Komplexes lässt man mittels Zentrifugierens bei einer Schwerebeschleunigung von 10000 g während 10 Minuten absetzen.

Den erhaltenen Niederschlag spült man mit 20 ml Diäthyläther zwecks Beseitigung von Lipidbeimengungen aus. Das Produkt extrahiert man mit 2 ml Methanol. Die Ausbeute an Produkt beträgt 0,07 g (85%).

- 13 -

Beispiel 8

10 g Weizenkleie zerreibt man in einer wässrigen Lösung des Trishydroxyaminomethanchlorids mit einer Konzentration von 0,05 Mol bei einem pH-Wert von 8,5. Das hergestellte Homogenat zentrifugiert man bei einer Schwerebeschleunigung von 10000 g während 10 Minuten. Die zellfreie wässrige Salz-Phase behandelt man mit Papain in einer Menge von 50 $\mu$g/ml während 8 Stunden. Die zusammengeklebten Teilchen des Protein-Phosphatidilinosit-Komplexes lässt man mittels Zentrifugierens bei einer Schwerebeschleunigung von 10000 g während 10 Minuten absetzen. Man spült den Niederschlag mit 50 ml Diäthyläther zwecks Beseitigung von Lipidbeimengungen aus. Das Produkt wird aus dem Niederschlag mit 5 ml Methanol extrahiert. Die Ausbeute an Produkt beträgt 0,11 g (95%).

Beispiel 9

10 g Weizenkleie homogenisiert man in einer wässrigen Natriumchloridlösung mit einer Konzentration von 0,05 Mol bei einem pH-Wert von 7 in einem Homogenisator. Das hergestellte Homogenat zentrifugiert man bei einer Schwerebeschleunigung von 10000 g während 10 Minuten. Die abgeschiedene zellfreie wässrige Salz-Phase setzt man der Filtration an einem Ultrafilter mit Porenabmessungen von 0,2 $\mu$m aus. Der Niederschlag wird vom Filter abgenommen und mit 50 ml Diäthyläther zwecks Beseitigung von Lipidbeimengungen ausgespült. Das Produkt wird aus dem Niederschlag mit 2 ml Methanol extrahiert. Die Ausbeute an Produkt beträgt 0,06 g (63%).

Industrielle Anwendbarkeit

Die vorliegende Erfindung kann in der chemischen Industrie, in der Biotechnologie und in der Medizin realisiert werden.

PATENTANSPRÜCHE

1. Verfahren zur Herstellung von Phosphatidilinosit aus einem biologischen Objekt mittels Homogenisierung des genannten Objektes und Extrahierung des Produktes, dadurch g e k e n n z e ii c h n e t, dass es vorsieht:
- Homogenisierung des biologischen Objektes in einer wässrigen Salzlösung mit einer molaren Konzentration von 0,005 bis 1 Mol bei einem pH-Wert von 5,0 bis 11,0,
- Trennung des Homogenats in zellfreie wässrige Salz-Phase, die Teilchen des Protein-Phosphatidilinosit-Komplexes aufweist, und in den Niederschlag, der nichtzerstörte Zellen und Teilchen anderer Phospholipide aufweist, mittels Zentrifugierens bei einer Schwerebeschleunigung von 3000 bis 30000 g oder mittels Filtration auf einem Filter mit Porenabmessungen von 3 bis 50 $\mu$m,
- Ausscheidung der Teilchen des Protein-Phosphatidilinosit-Komplexes aus der zellfreien wässrigen Salz-Phase,
- Extrahierung des Phosphatidilinosits aus den abgeschiedenen Teilchen des Protein-Phosphatidilinosit-Komplexes.

2. Verfahren nach Anspruch 1, dadurch g e k e n n z e i c h n e t, dass man die Homogenisierung des biologischen Objektes in einer wässrigen Salzlösung mit einer molaren Konzentration von 0,05 bis 0,1 Mol durchführt.

3. Verfahren nach Anspruch 1, dadurch g e k e n n z e i c h n e t, dass man die Abscheidung von Teilchen des Protein-Phosphatidilinosit-Komplexes aus der zellfreien wässrigen Salz-Phase mittels Gelchromatografie an einem Sorptionsmittel durchführt, das es ermöglicht, Stoffe mit einer molekularen Masse über 1 Mio Dalton zu trennen.

4. Verfahren nach Anspruch 1, dadurch g e k e n n - z e i c h n e t, dass man die Abscheidung von Teilchen des Protein-Phosphatidilinosit-Komplexes aus der zellfreien wässrigen Salz-Phase mittels Ultrafiltration auf einem Filter mit Porenabmessungen von höchstens 0,2 m durchführt.

5. Verfahren nach Anspruch 1, dadurch g e k e n n - z e i c h n e t, dass man die Absdheidung von Teilchen des Protein-Phosphatidilinosit-Komplexes aus der zellfreien wässrigen Salz-Phase mit alkalischen beziehtungs- weise neutralen Proteasen durchführt.

6. Verfahren nach Anspruch 1, dadurch g e k e n n - z. e i c h n e t, dass man die Extrahierung des Phosphatidilinosits aus den abgeschiedenen Teilchen des Proteinphosphatidilinosit-Komplexes mit Methanol, oder mit seinem Gemisch mit Chloroform, oder destilliertem Wasser durchführt.

7. Verfahren nach Anspruch 1 bis 5, dadurch g e k e n n z e i c h n e t, dass man als pflanzliches Objekt Produkte der Samenverarbeitung von Graserpflanzen verwendet.

# INTERNATIONAL SEARCH REPORT

International Application No PCT/SU 87/00059

## I. CLASSIFICATION OF SUBJECT MATTER (if several classification symbols apply, indicate all) 6

According to International Patent Classification (IPC) or to both National Classification and IPC

$IPC^4$ - A 61 K 35/78

## II. FIELDS SEARCHED

| Minimum Documentation Searched 7 | |
|---|---|
| Classification System | Classification Symbols |
| $IPC^4$ | A 61 K 35/78, G 01 N 30/48 |

| Documentation Searched other than Minimum Documentation to the Extent that such Documents are Included in the Fields Searched 8 |
|---|
| |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | SU, A1, 1123699 (Kharkovsky nauchno-issledovatelsky khimico-farmatsevtichesky institut) 15 November 1984 (15.11.84), see column 2, lines 4-16 | 1 |
| | -- | |
| A | US, A, 4169090, (General Foods, Limited), 25 September 1979 (25.09.79), see column 8, lines 24-38 | 1-7 |
| | -- | |
| A | FR, A1, 2442633, (THE KITASATO INSTITUTE), 27 June 1980 (27.06.80), see page 14, lines 18-34 | 1-7 |
| | ------------------- | |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 20 October 1987 (20.10.87) | 18 November 1987 (18.11.87) |
| International Searching Authority | Signature of Authorized Officer |
| ISA/SU | |

Form PCT/ISA/210 (second sheet) (January 1985)